(19) Europäisches Patentamt / European Patent Office / Office européen des brevets

(11) **EP 1 248 944 B1**

(12) **FASCICULE DE BREVET EUROPEEN**

(45) Date de publication et mention de la délivrance du brevet:
**08.10.2008 Bulletin 2008/41**

(21) Numéro de dépôt: **01965354.2**

(22) Date de dépôt: **27.08.2001**

(51) Int Cl.:
*G01F 1/32* (2006.01)   *F15C 1/22* (2006.01)

(86) Numéro de dépôt international:
**PCT/FR2001/002670**

(87) Numéro de publication internationale:
**WO 2002/018885 (07.03.2002 Gazette 2002/10)**

(54) **METHODE DE MESURE DE LA FREQUENCE D'OSCILLATION D'UN JET DE FLUIDE DANS UN OSCILLATEUR FLUIDIQUE**

VERFAHREN ZUR MESSUNG DER OSZILLATIONSFREQUENZ EINES FLÜSSIGKEITSSTRAHLS IN EINEM FLUIDISCHEN OSZILLATOR

METHOD FOR MEASURING OSCILLATION FREQUENCY OF A FLUID JET IN A FLUIDIC OSCILLATOR

(84) Etats contractants désignés:
**DE FR GB**

(30) Priorité: **01.09.2000 FR 0011257**

(43) Date de publication de la demande:
**16.10.2002 Bulletin 2002/42**

(73) Titulaire: **Actaris S.A.S.**
**92100 Boulogne-Billancourt (FR)**

(72) Inventeur: **VANNUFFELEN, Stéphane**
**F-75014 Paris (FR)**

(74) Mandataire: **Lenne, Laurence et al**
**Feray Lenne Conseil**
**39/41, avenue Aristide Briand**
**92160 Antony (FR)**

(56) Documents cités:
DE-A- 3 501 257     FR-A- 2 326 685
GB-A- 2 155 635     US-A- 3 587 312
US-A- 5 864 067     US-A- 5 908 991

## Description

L'invention est relative à une méthode de mesure de la fréquence d'oscillation d'un jet de fluide dans un oscillateur fluidique à l'aide d'un capteur thermique dont la résistance dépendant de sa température varie en fonction de la fréquence d'oscillation du jet.

L'oscillateur fluidique est bien connu par l'homme de l'art et trouve une application particulièrement intéressante dans le domaine de la mesure de débit de fluide telle que décrite dans le document EP 0 882 951. Un débitmètre à oscillateur fluidique 1, tel que représenté en vue éclatée sur la figure 1, comporte un corps de débitmètre comprenant deux parties latérales 2, 3 qui encadrent un bloc central 4 incluant une unité de mesure 5.

La partie latérale 2 définit à l'intérieur une chambre dite amont (non représentée) et dans laquelle le fluide s'introduit après être passé par une ouverture d'amenée (non représentée).

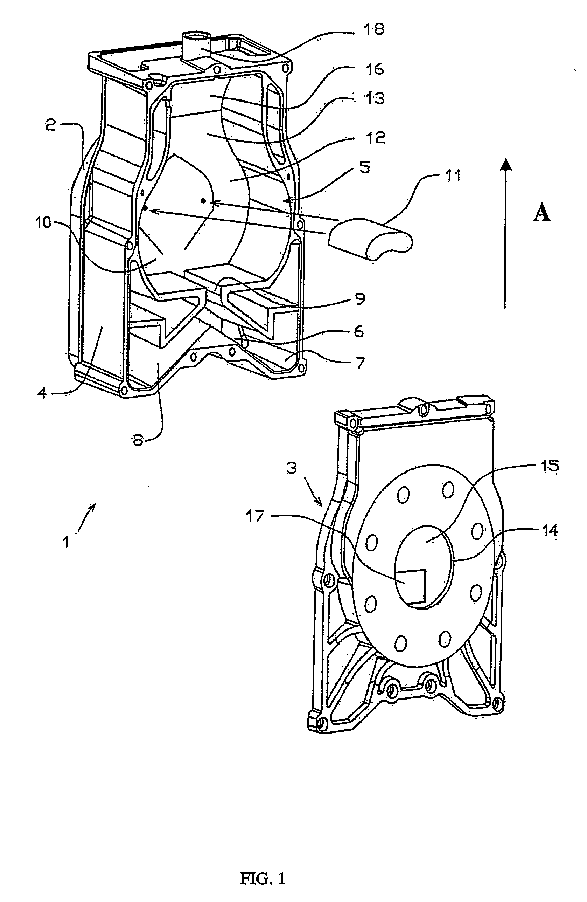

Cette chambre comporte une paroi (non représentée) dans laquelle l'ouverture d'amenée est aménagée. Cette paroi joue le rôle d'une paroi de déflection et reçoit l'impact de l'écoulement du fluide provenant de l'ouverture, fractionne celui-ci et le défléchit vers deux orifices (seul un orifice 6 est visible sur la figure 1) aménagés dans la paroi de déflection.

Deux passages 7, 8 prolongent respectivement les orifices et dirigent les fractions d'écoulement de fluide en les faisant converger vers l'entrée 9 de l'unité de mesure 5. Cette entrée a la forme générale d'une fente allongée.

L'unité de mesure 5 comprend une chambre d'oscillation 10 dans laquelle un obstacle 11 est positionné suivant les deux flèches indiquées sur la figure 1 en vis-à-vis de l'entrée 9.

Le fluide débouchant dans la chambre d'oscillation et rencontrant la partie frontale de l'obstacle 11, oscille transversalement par rapport à la direction A dans un plan parallèle à la paroi 12 et s'écoule alternativement de part et d'autre dudit obstacle pour quitter la chambre d'oscillation par la sortie 13 suivant cette direction A. L'entrée 9 et la sortie 13 de la chambre d'oscillation sont alignées suivant la direction A. La chambre d'oscillation 10 est délimitée, d'une part par la paroi 12 et d'autre part par une autre paroi 15 parallèle à ladite paroi 12.

Le débitmètre est fixé entre deux canalisations au niveau de raccordement à bride comportant les ouvertures d'amenée (non représentée) et d'évacuation 14.

Le fluide qui sort de la chambre d'oscillation emprunte le passage 16 qui forme un coude pour guider le fluide vers l'ouverture d'évacuation 14.

La partie latérale 2 est fabriquée d'une seule pièce avec le bloc central 4 du corps du débitmètre qui inclut l'unité de mesure 5. L'autre partie latérale 3, fabriquée à part, est ensuite rapportée sur le bloc central de manière à faire office de couvercle.

Une cavité 17 est pratiquée dans la paroi 15 afin de permettre l'installation dans celle-ci d'au moins un capteur d'écoulement, par exemple un capteur thermique dont la fonction est de détecter les oscillations du fluide dans la chambre d'oscillation 10. Ainsi, du fait de l'existence d'une relation de proportionnalité entre la fréquence d'oscillation du jet de fluide dans la chambre d'oscillation et le débit de fluide dans les canalisations, la mesure de la fréquence d'oscillation permet d'accéder à la valeur du débit de fluide. Le balayage du capteur thermique par le jet de fluide modifie sa température par échanges thermiques, et par conséquent la mesure des variations de température du capteur par l'intermédiaire des variations de sa résistance électrique permet de déterminer la fréquence d'oscillation du jet.

De préférence, le débitmètre comporte deux capteurs thermiques disposés dans la cavité 17, entre l'obstacle 11 et l'entrée 9 symétriquement de part et d'autre de l'entrée 9.

Un conduit 18 perforé d'un trou est aménagé dans le corps du débitmètre pour permettre le passage des connexions électriques entre ledit corps, en particulier le ou les capteurs et le totalisateur destiné à indiquer à l'utilisateur les paramètres tels que le débit, la consommation de fluide.

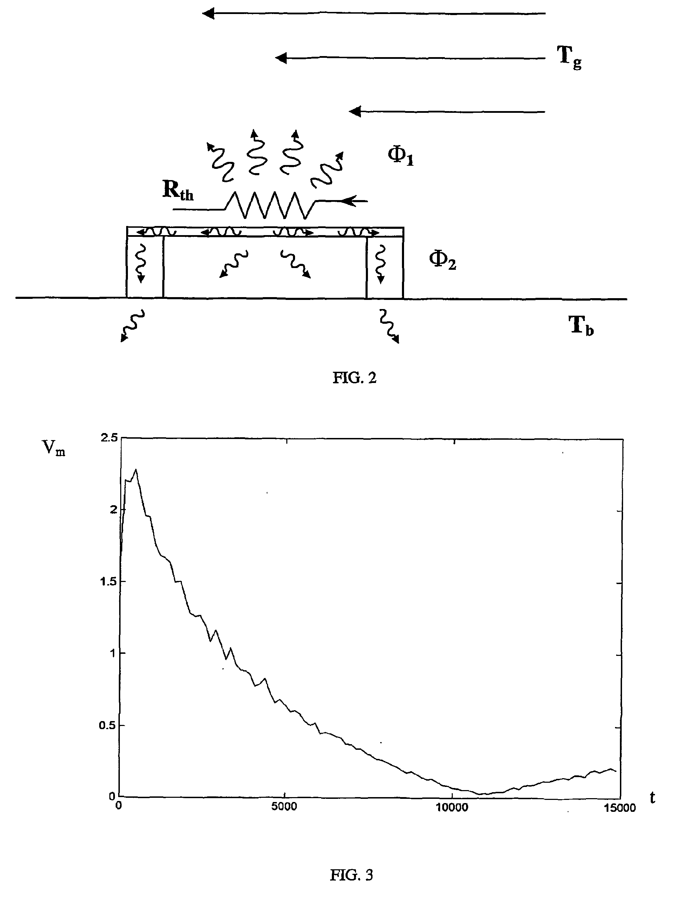

Les échanges thermiques entre le capteur thermique, le fluide et le corps du débitmètre respectivement sont représentés sur la figure 2.

Les échanges thermique entre le capteur et le fluide oscillant sont décrits par l'équation suivante :

$$\Phi_1 = K_1(T_{th} - T_g)$$

où $\Phi_1$ est la puissance dissipée dans la direction du fluide oscillant,

$K_1$ est la conductance thermique entre le capteur et le fluide,
$T_{th}$ est la température du capteur, et
$T_g$ est la température du fluide oscillant.

Il faut noter que la conductance thermique $K_1$ est dépendante de la surface d'échange du capteur, de la conductivité thermique, densité et vitesse du fluide. Par conséquent, lorsque le jet de fluide oscille, $K_1$ dépend du temps.

2

Les échanges thermique entre le capteur et le corps de l'oscillateur fluidique par la structure du capteur et son packaging sont décrits par l'équation suivante :

$$\Phi_2 = K_2(T_{th} - T_b)$$

où $\Phi_2$ est la puissance dissipée dans la direction du corps de l'oscillateur fluidique,

$K_2$ est la conductance thermique entre le capteur et le corps de l'oscillateur fluidique,
$T_{th}$ est la température du capteur, et
$T_b$ est la température du corps de l'oscillateur fluidique.

Il faut noter que la conductance thermique $K_2$ est indépendante des oscillations du fluide et par conséquent n'apporte aucune information quant à la détermination de la fréquence d'oscillation.
Le principe de conservation de l'énergie conduit à l'équation décrivant les échanges thermiques suivante :

$$C\frac{dT_{th}}{dt} + K_1(t)(T_{th} - T_g) + K_2(T_{th} - T_b) = p(t)$$

où $C$ est la capacitance thermique du capteur, et
$p(t)$ est la puissance électrique instantanée dissipée par le capteur.

Il a été remarqué que pour un capteur alimenté par une tension continue, comme cela est le cas pour les débitmètres à oscillateur fluidique de l'art antérieur par exemple comme décrit dans le document FR2326685, et dans des conditions de température bien précises qui correspondent à :

$$T_g - T_b = \frac{V^2}{4K_2 R_{th}},$$

où $R_{th}$ est la résistance électrique du capteur,
l'information sur la pulsation du jet de fluide oscillant $\omega_o$ est perdue car $\delta T_{th}(t) = 0$.
De telles conditions de température peuvent par exemple se rencontrer lorsqu'un fluide chaud entre dans un débitmètre froid. La figure 3 indique l'évolution de l'amplitude du signal $V_m$ mesuré aux bornes de sortie du capteur thermique en fonction du temps $t$. Il est observé que dans les conditions de température précitées, le signal diminue pour atteindre une valeur ne permettant plus la mesure de la fréquence d'oscillation du jet.

Un objet de la présente invention est de proposer une méthode de mesure de la fréquence d'oscillation d'un jet de fluide dans un oscillateur fluidique à l'aide d'un capteur thermique qui soit insensible aux conditions de température, et plus particulièrement aux phases transitoires où par exemple du fluide chaud pénètre dans un débitmètre froid.

Cet objet est atteint selon l'invention grâce à une méthode de mesure de la fréquence d'oscillation d'un jet de fluide dans un oscillateur fluidique à l'aide d'un capteur thermique dont la résistance varie en fonction de la fréquence d'oscillation du jet $f_o$, ladite méthode consistant à alimenter le capteur thermique par une tension alternative de fréquence $\underline{f}$, et à déterminer les composantes fréquentielles du signal en sortie du capteur thermique autour de la fréquence $3 \times f$, afin de déterminer la fréquence d'oscillation du jet $f_o$.

Selon le mode de réalisation préféré de la méthode selon l'invention, la détermination des composantes fréquentielles du signal en sortie du capteur thermique est effectuée en plusieurs étapes :

- d'une part en mesurant aux bornes du capteur thermique le signal de mesure $V_m(t)$, puis
- en démodulant de façon synchrone le signal de mesure à la fréquence $3 \times f$, et enfin
- en déterminant la fréquence du signal de mesure démodulé, laquelle correspond à la fréquence d'oscillation du jet $f_o$.

L'étape de démodulation synchrone du signal de mesure à la fréquence $3 \times f$, s'effectue de préférence en multipliant le signal de mesure $V(t)$ par $\cos(3 \times 2\pi \times f \times t)$.
D'autres avantages et caractéristiques de l'invention ressortiront à la lecture de la description suivante faite à titre d'exemple et en référence aux dessins annexés dans lesquels :

- la figure 1 représente un débitmètre à oscillateur fluidique de l'art antérieur, selon une vue éclatée,
- la figure 2 représente une vue schématique des échanges thermiques entre le capteur thermique, le fluide et le corps du débitmètre respectivement,
- la figure 3 représente l'évolution de la composante à la fréquence f du signal en sortie du capteur thermique lorsque celui-ci est alimenté par une tension continue lors d'une phase de transition thermique,
- la figure 4 représente schématiquement le circuit de polarisation du capteur thermique sous la forme d'un demi-pont de Wheatstone,
- les figures 5.A, 5.B représentent les composantes fréquentielles du signal en sortie du capteur thermique lorsque celui-ci est alimenté par une tension continue et alternative respectivement,
- la figure 6 représente l'évolution de la composante à la fréquence 3.f du signal en sortie du capteur thermique lorsque celui-ci est alimenté par une tension alternative lors d'une phase de transition thermique,
- la figure 7 représente schématiquement les différentes étapes de la méthode selon un mode de réalisation particulier de l'invention.

Lorsque le capteur est alimenté par une tension alternative d'amplitude $v$ la puissance électrique instantanée a pour expression :

$$p(t) = \frac{v^2}{R_{th}} cos^2(\omega t)$$

où $R_{th}$ est la résistance électrique du capteur, et
$\omega$ est la pulsation de la tension alternative d'alimentation du capteur.

Il est rapellé que la pulsation est reliée à la fréquence par la relation $\omega = 2\pi \times f$. Dans la suite, on utilisera indifféremment la fréquence ou la pulsation.

Dans ces conditions, la résolution de cette équation donne une solution de la forme $T_{th}(t) = f(p(t), K_1(t), K_2, T_{th}, T_b)$, laquelle peut être approximée par une méthode des perturbations, qui conduit à une réponse thermique en mode alternatif suivante :

$$\delta T_{th}(t) = T_\omega \cos(2\omega t + \varphi) + \varepsilon T_{\omega A} \cos((2\omega + \omega_0)t + \varphi_A) + \varepsilon T_{\omega B} \cos((2\omega - \omega_0)t + \varphi_B) + \varepsilon T_{\omega C} \sin(\omega_0 t + \varphi_C)$$

où $\omega_0$ est la pulsation du jet de fluide oscillant,
et où

$$T_\omega = \frac{P_{ac}}{\sqrt{(K_1 + K_2)^2 + (2C\omega)^2}} \quad et \quad \sin(\varphi) = \frac{-2C\omega}{\sqrt{(K_1 + K_2)^2 + (2C\omega)^2}}$$

$$T_{\omega A} = \frac{K_1 T_\omega}{2\sqrt{C^2(2\omega + \omega_0)^2 + (K_1 + K_2)^2}}$$

et

$$\sin(\varphi'_A) = \frac{C(2\omega + \omega_0)}{\sqrt{C^2(2\omega + \omega_0)^2 + (K_1 + K_2)^2}}$$

avec

$$\varphi_A = \varphi + \pi - \varphi'_A$$

$$T_{\omega B} = \frac{K_1 T_\omega}{2\sqrt{C^2(2\omega - \omega_0)^2 + (K_1 + K_2)^2}}$$

et

$$\sin(\varphi'_B) = \frac{C(2\omega - \omega_0)}{\sqrt{C^2(2\omega - \omega_0)^2 + (K_1 + K_2)^2}}$$

avec

$$\varphi_B = \varphi + \pi - \varphi'_B$$

$$T_{\omega C} = \frac{K_1}{K_1 + K_2} \frac{K_2(T_g - T_b) - P_{ac}}{\sqrt{C^2\omega_0^2 + (K_1 + K_2)^2}}$$

et

$$\sin(\varphi_C) = \frac{-C\omega_0}{\sqrt{C^2\omega_0^2 + (K_1 + K_2)^2}}$$

et $P_{ac} = \dfrac{V^2}{8R}$ représente la puissance électrique dissipée dans le capteur thermique.

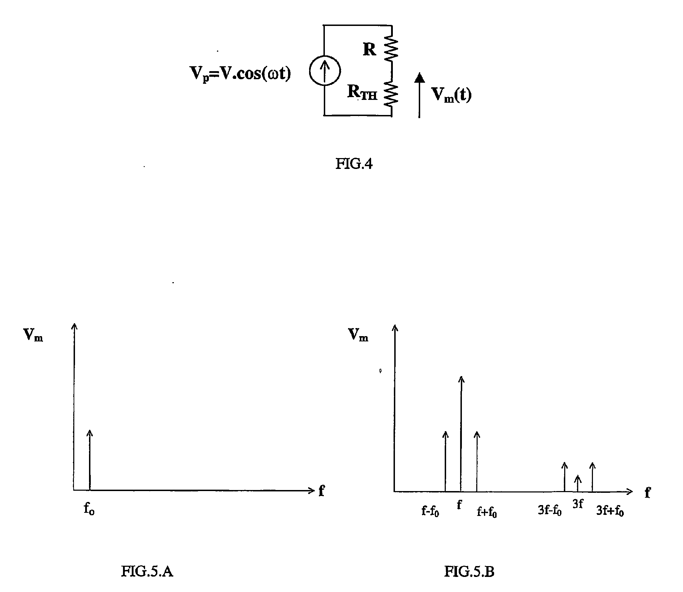

La solution consiste à utiliser des composantes thermiques qui ne s'annulent pas quelle que soit la température de l'oscillateur $T_b$ et du jet de fluide $T_g$.
Pour convertir la réponse thermique en un signal électrique exploitable, on peut employer un demi pont de Wheatstone tel que représenté à la figure 4. Le capteur de résistance $R_{TH}$ en série avec une résistance R de valeur déterminée est polarisé par une tension alternative $V_p$. La tension de mesure $V_m$ est mesurée aux bornes du capteur de résistance $R_{TH}$. Une analyse spectrale des composantes de cette tension est effectuée pour déterminer la pulsation du jet de fluide oscillant $\omega_o$ ou sa fréquence $f_o$.

Les figures 5.A, 5.B représentent les composantes fréquentielles du signal en sortie du capteur thermique lorsque celui-ci est alimenté par une tension continue comme dans l'art antérieur et par une tension alternative selon l'invention respectivement.

Lorsque le capteur est alimenté par une tension continue, l'analyse en fréquence ne révèle de façon évidente qu'une seule composante à $f_o$. Il existe comme expliqué précédemment, des conditions de températures pour lesquelles cette composante à une amplitude nulle.

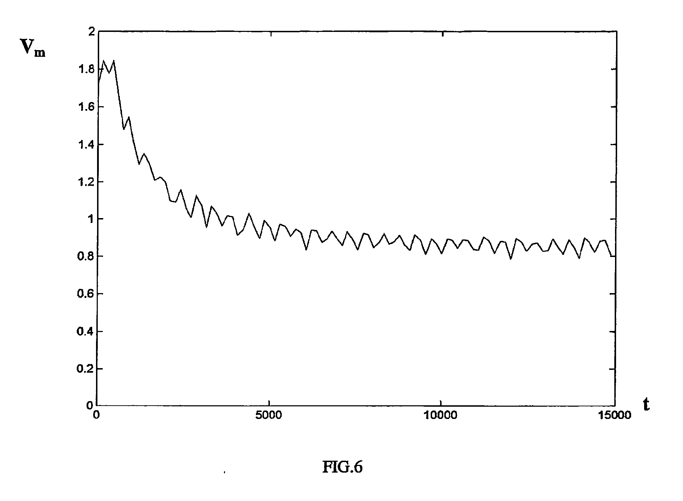

Lorsque le capteur est alimenté par une tension alternative, l'analyse en fréquence révèle des composantes fréquentielles dépendant de $f_o$ localisées à f-$f_0$, f+$f_0$, 3f-$f_0$, 3f+$f_0$. Il a été observé (voir la figure 6) que les composantes à 3f-$f_0$ et 3f+$f_0$ ne s'annulent pas quelle que soit la température du corps de l'oscillateur $T_b$ et du jet de fluide $T_g$.

Le tableau ci-dessous présente les composantes fréquentielles de la tension en sortie du demi pont de Wheatstone lorsque le capteur est alimenté par une tension alternative.

| | **Composantes de Vm(t) :** |
|---|---|
| ω-ω₀ | $\dfrac{\alpha_T V \varepsilon}{32}\left[T_{\omega C}\cos((\omega-\omega_0)t-\varphi_C)+T_{\omega B}\cos((\omega-\omega_0)t+\varphi_B)\right]$ |
| ω | $\dfrac{V}{2}\cos(\omega t)+\dfrac{\alpha_T P_{ac} V}{4\sqrt{(K_1+K_2)^2+(2C\omega)^2}}\cos(\omega t+\varphi)$ |
| ω+ω₀ | $\dfrac{\alpha_T V \varepsilon}{32}\left[T_{\omega C}\cos((\omega+\omega_0)t+\varphi_C)+T_{\omega A}\cos((\omega+\omega_0)t+\varphi_A)\right]$ |
| 3ω-ω₀ | $\dfrac{\alpha_T V \varepsilon}{32}T_{\omega B}\cos((3\omega-\omega_0)t+\varphi_B)$ |
| 3ω | $\dfrac{\alpha_T P_{ac} V}{4\sqrt{(K_1+K_2)^2+(2C\omega)^2}}\cos(3\omega t+\varphi)$ |
| 3ω+ω₀ | $\dfrac{\alpha_T V \varepsilon}{32}T_{\omega A}\cos((3\omega+\omega_0)t+\varphi_A)$ |

avec les différents paramètres dont les expressions ont été mentionnées précédemment.

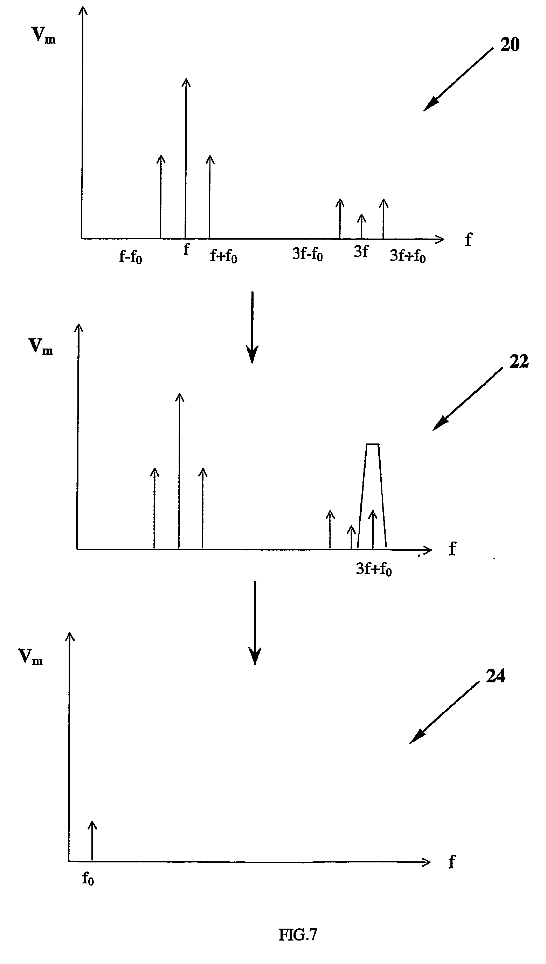

La figure 7 représente schématiquement les différentes étapes de la méthode selon un mode de réalisation particulier de l'invention.

Le capteur thermique est alimenté par une tension alternative de fréquence f.
La première étape 20 consiste à mesurer aux bornes du capteur thermique le signal de mesure $V_m(t)$. L'analyse en fréquence révèle des composantes fréquentielles dépendant de $f_o$ localisées à f-$f_0$, f+fo, 3f-$f_0$, 3f+$f_0$.
La seconde étape 22 consiste à isoler la composante fréquentielle à 3f+$f_0$, laquelle ne s'annule pas quelle que soit la température du corps de l'oscillateur $T_b$ et du jet de fluide $T_g$.

Cette étape s'effectue en démodulant de façon synchrone le signal de mesure à la fréquence 3×f. En pratique, l'étape de démodulation synchrone du signal de mesure à la fréquence 3.f, consiste à multiplier le signal de mesure V (t) par cos(3×2π×f×t). Cette opération permet de ramener le spectre dans la bande dite de base. La troisième étape 24 consiste à déterminer la fréquence du signal de mesure démodulé, laquelle correspond à la fréquence d'oscillation du jet $f_o$. En pratique, cette étape s'effectue en comptant le nombre de périodes du signal de mesure démodulé pendant un temps donné.

Avantageusement, avant l'étape de détermination de la fréquence du signal de mesure, le signal de mesure démodulé, est filtré au moyen d'un filtre passe-bas afin d'éliminer les composantes fréquentielles indésirables introduites par l'étape de démodulation synchrone.

Il est à noter que l'ensemble de la méthode peut être considérablement simplifiée dans le cadre de mesures en laboratoire, puisque dans ce cas on peut disposer de moyens de calcul supplémentaires et distincts de ceux du débitmètre. Ces moyens de calcul permettent de calculer la transformée de Fourier rapide (FFT) du signal mesuré aux bornes du capteur thermique. Ce calcul permet d'isoler les différentes composantes fréquentielles intéressantes et en particulier de déterminer directement la valeur de la pulsation $\omega_o$ donc de la fréquence $f_o$ pour les composantes à 3f-$f_0$ et/ou 3f+$f_0$.
Ces moyens de calcul supplémentaires sont par exemple un micro-ordinateur dont la consommation en énergie et l'encombrement ne sont pas compatible avec un débitmètre compact et autonome fonctionnant la plupart du temps au moyen de piles, c'est pourquoi la transformée de Fourier rapide du signal mesuré n'est possible que dans le cadre d'une utilisation en laboratoire.

**Revendications**

1. Méthode de mesure de la fréquence d'oscillation d'un jet de fluide dans un oscillateur fluidique à l'aide d'un capteur thermique dont la résistance varie en fonction de la fréquence d'oscillation du jet $f_o$, ladite méthode **caractérisée**

**par** les étapes suivantes:

- alimenter le capteur thermique par une tension alternative de fréquence f,
- déterminer les composantes fréquentielles du signal en sortie du capteur thermique autour de la fréquence $3 \times f$, afin de déterminer la fréquence d'oscillation du jet $f_o$.

2. Méthode de mesure de la fréquence d'oscillation d'un jet de fluide dans un oscillateur fluidique à l'aide d'un capteur thermique selon la revendication 1, **caractérisée en ce que** la détermination des composantes fréquentielles du signal en sortie du capteur thermique comporte les étapes suivantes:

- mesurer aux bornes du capteur thermique le signal de mesure V(t) résultant,
- démoduler de façon synchrone le signal de mesure à la fréquence $3 \times f$,
- déterminer la fréquence du signal de mesure démodulé, laquelle correspond à la fréquence d'oscillation du jet $f_o$.

3. Méthode de mesure de la fréquence d'oscillation d'un jet de fluide dans un oscillateur fluidique à l'aide d'un capteur thermique selon la revendication 2, **caractérisée en ce qu'**avant l'étape de détermination de la fréquence du signal de mesure, le signal de mesure démodulé est filtré au moyen d'un filtre passe-bas.

4. Méthode de mesure de la fréquence d'oscillation d'un jet de fluide dans un oscillateur fluidique à l'aide d'un capteur thermique selon la revendication 2, **caractérisée en ce que** l'étape de démodulation synchrone du signal dé mesure à la fréquence $3 \times f$, s'effectue en multipliant le signal de mesure V(t) par $\cos(3 \times 2\pi \times f \times t)$.

5. Méthode de mesure de la fréquence d'oscillation d'un jet de fluide dans un oscillateur fluidique à l'aide d'un capteur thermique selon la revendication 1, **caractérisée en ce que** la détermination des composantes fréquentielles du signal en sortie du capteur thermique et de la fréquence d'oscillation du jet $f_o$ est effectuée par une méthode de transformée de Fourier rapide.

**Claims**

1. A method for measuring the oscillation frequency of a fluid jet in a fluidic oscillator using a temperature sensor whereof the resistance varies according to the oscillation frequency of the jet $f_o$, said method being **characterized by** the following steps:

- powering the temperature sensor through an alternating voltage of frequency f,
- determining the frequency components of the signal coming from the temperature sensor around the frequency 3xf, in order to determine the oscillation frequency of the jet $f_o$.

2. The method for measuring the oscillation frequency of a fluid jet in a fluidic oscillator using a temperature sensor according to claim 1, **characterized in that** the determination of the frequency components of the signal coming from the temperature sensor includes the following steps:

- measuring, at the terminals of the temperature sensor, the resulting V(t) measuring signal,
- synchronously demodulating the measuring signal at the frequency 3xf,
- determining the frequency of the demodulated measuring signal, which corresponds to the oscillation frequency of the jet $f_o$.

3. The method for measuring the oscillation frequency of a fluid jet in a fluidic oscillator using a temperature sensor according to claim 2, **characterized in that** before the step for determining the frequency of the measuring signal, the demodulated measuring signal is filtered using a low-pass filter.

4. The method for measuring the oscillation frequency of a fluid jet in a fluidic oscillator using a temperature sensor according to claim 2, **characterized in that** the step of synchronous demodulation of the measuring signal at the frequency 3xf is done by multiplying the measuring signal V(t) by $\cos(3x2\pi xfxt)$.

5. The method for measuring the oscillation frequency of a fluid jet in a fluidic oscillator using a temperature sensor according to claim 1, **characterized in that** the determination of the frequency components of the signal coming from the temperature sensor and the oscillation frequency of the jet $f_o$ is done using a rapid Fourier transform method.

# EP 1 248 944 B1

**Patentansprüche**

1. Methode zum Messen der Schwingungsfrequenz eines Fluidstrahls in einem Fluidoszillator mit Hilfe eines Thermosensors, dessen Widerstand in Abhängigkeit von der Schwingungsfrequenz des Strahls $f_0$ variiert, wobei diese Methode durch die folgenden Schritte **gekennzeichnet** ist:

   - Versorgung des Thermosensors mit einer Wechselspannung der Frequenz $\underline{f}$,
   - Bestimmung der Teilfrequenzen des Signals am Ausgang des Thermosensors um die Frequenz $3 \times f$ herum, um die Schwingungsfrequenz des Strahls $f_0$ zu bestimmen.

2. Methode zum Messen der Schwingungsfrequenz eines Fluidstrahls in einem Fluidoszillator mit Hilfe eines Thermosensors nach Anspruch 1, **dadurch gekennzeichnet, dass** die Bestimmung der Teilfrequenzen des Signals am Ausgang des Thermosensors die folgenden Schritte umfasst:

   - Messen des resultierenden Messsignals V(t) an den Klemmen des Thermosensors,
   - synchrones Demodulieren des Messsignals mit der Frequenz $3 \times f$,
   - Bestimmung der Frequenz des demodulierten Messsignals, die der Schwingungsfrequenz des Strahls $f_0$ entspricht.

3. Methode zum Messen der Schwingungsfrequenz eines Fluidstrahls in einem Fluidoszillator mit Hilfe eines Thermosensors nach Anspruch 2, **dadurch gekennzeichnet, dass** das demodulierte Messsignal vor dem Schritt der Bestimmung der Frequenz des Messsignals mit einem Tiefpassfilter gefiltert wird.

4. Methode zum Messen der Schwingungsfrequenz eines Fluidstrahls in einem Fluidoszillator mit Hilfe eines Thermosensors nach Anspruch 2, **dadurch gekennzeichnet, dass** der Schritt des synchronen Demodulierens des Messsignals mit der Frequenz $3 \times f$ durch Multiplikation des Messsignals V(t) mit $\cos(3 \times 2\pi \times f \times t)$ erfolgt.

5. Methode zum Messen der Schwingungsfrequenz eines Fluidstrahls in einem Fluidoszillator mit Hilfe eines Thermosensors nach Anspruch 1, **dadurch gekennzeichnet, dass** die Bestimmung der Teilfrequenzen des Signals am Ausgang des Thermosensors und der Schwingungsfrequenz des Strahls $f_0$ durch eine Fast Fourier Transformation-Methode erfolgt.

FIG. 1

FIG. 2

FIG. 3

10

$$V_p = V.\cos(\omega t)$$

R

$R_{TH}$

$V_m(t)$

FIG.4

$V_m$

$f_o$

f

FIG.5.A

$V_m$

$f-f_0$   f   $f+f_0$   $3f-f_0$   3f   $3f+f_0$

f

FIG.5.B

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0882951 A

- FR 2326685